# FASCICULE DE BREVET EUROPEEN

(11) **EP 3 154 831 B1**
(45) Date de publication et mention de la délivrance du brevet: **18.07.2018**
(21) Numéro de dépôt: 15724594.5
(22) Date de dépôt: 19.05.2015
(51) Int. Cl.: B60S 1/34

(54) **SYSTÈME D'ESSUYAGE POUR VÉHICULE DÉBRAYABLE EN CAS DE COUPLE DÉPASSANT UN SEUIL**
WISCHERSYSTEM FÜR EIN FAHRZEUG, DAS IM FALL DER ÜBERSCHREITUNG EINES SCHWELLENWERTS DES DREHMOMENTS AUSKUPPELT
WIPER SYSTEM FOR A VEHICLE THAT DISENGAGES IN THE EVENT OF TORQUE EXCEEDING A THRESHOLD

(30) Priorité: 16.06.2014 FR 1455458
(43) Date de publication de la demande: 19.04.2017
(73) Titulaire: Valeo Systèmes d'Essuyage, 78322 Le Mesnil Saint Denis (FR)
(72) Inventeur: AUCLAIR, Guillaume, F-63800 Cournon (FR)
(74) Mandataire: Vincent, Catherine Marie Marguerite
(86) Numéro de dépôt international: PCT/EP2015/060952
(87) Numéro de publication internationale: WO 2015/193044

(56) Documents cités:
- DE-A1- 2 529 702
- DE-A1-102012 201 287
- FR-A1- 2 379 408
- FR-A1- 2 931 761

## Description

L'invention concerne le domaine des systèmes d'essuyage pour surface vitrée de véhicule automobile.

Un tel système comprend un moteur présentant un arbre de sortie entraînant en rotation alternée, par l'intermédiaire d'un mécanisme d'entraînement, un bras porte-balai protégé par un carter.

Le système d'essuyage peut subir d'importantes contraintes mécaniques. D'une part, il peut rencontrer divers obstacles sur la surface vitrée. Ces obstacles modifient la trajectoire calculée du bras et donc imposent au système d'essuyage des contraintes. A titre d'exemples, ces obstacles peuvent être : une partie d'un porte-vélo, du givre ou de la neige accumulée sur la vitre. D'autre part, même lorsque le système d'essuyage n'est pas en fonctionnement, il peut être soumis à certaines contraintes mécaniques. De la neige peut s'accumuler sur le système, celui-ci peut être soumis à un jet d'eau à haute pression lors du nettoyage du véhicule ou encore un individu, par exemple un enfant, peut exercer une pression significative sur le bras porte-balai.

Ces contraintes mécaniques peuvent détériorer le système d'essuyage et le rendre inopérant. Le bras porte-balai peut se déformer ou même se rompre bien qu'il soit protégé par un carter. Le mécanisme d'entraînement du bras peut également devenir définitivement inutilisable de sorte qu'il faille le changer. Il en est de même pour le moteur d'entraînement du bras porte-balai. Comme le moteur d'entraînement et le bras sont de plus faibles dimensions dans le cas de système d'essuyage de lunette arrière, un tel système est particulièrement susceptible de se détériorer.

On connaît d'après la demande FR-2 931 761 un mécanisme d'entraînement d'un système d'essuyage pour surface vitrée capable de se désolidariser en rotation du bras porte-balai lorsque les contraintes subies par le bras dépassent un certain seuil. Ce mécanisme comporte deux bagues et un organe élastique. Mais ce mécanisme vient s'ajouter aux pièces que l'on retrouve habituellement dans un système d'essuyage et est relativement encombrant. Ce document montre aussi le préambule de la première revendication. Un but de l'invention est de proposer un mécanisme d'entraînement apte à débrayer un système d'essuyage si celui-ci subit un couple dépassant un certain seuil qui soit moins encombrant.

Pour ce faire, l'invention a pour objet un mécanisme d'entraînement d'un système d'essuyage pour véhicule, comprenant :
- un organe d'accouplement,
- une tête d'entraînement comprenant des moyens de liaison à un bras porte-balai, et ;
- un coulisseau agencé de sorte qu'il solidarise en rotation l'organe et la tête lorsqu'une valeur d'un couple appliqué sur la tête par rapport à l'organe est inférieure à un seuil prédéterminé, et les désolidarise en rotation dans le cas contraire en coulissant dans une direction perpendiculaire à un axe de rotation de l'organe.

Ainsi, une seule pièce, à savoir le coulisseau, assure la solidarisation en rotation de l'organe d'accouplement et de la tête. Et l'orientation de coulissement du coulisseau permet d'obtenir un système d'essuyage débrayable à encombrement réduit.

De plus, le système d'essuyage peut être facilement ré-embrayé après qu'il a été débrayé suite à l'action d'un couple dont la valeur dépasse le seuil. Un autre avantage est qu'il peut s'adapter sur un arbre standard d'un moteur d'entraînement de système d'essuyage.

Avantageusement, le coulisseau présente un logement de réception de l'organe d'accouplement.

De préférence, l'organe d'accouplement et le coulisseau forment un assemblage mâle-femelle apte à provoquer le coulissement du coulisseau par effet de rampe.

Selon un mode de réalisation, l'organe comprend un corps principal apte à provoquer le coulissement du coulisseau par effet de rampe.

Cet agencement est robuste car une détérioration minimale de l'assemblage n'empêche pas le mécanisme de fonctionner.

Avantageusement, l'organe est formé par un insert apte à être relié à un arbre d'un moteur.

Il n'est ainsi pas nécessaire de faire coopérer directement l'arbre avec le coulisseau.

De préférence, l'un parmi l'organe et le coulisseau présente un relief et l'autre parmi l'organe et le coulisseau présente une cavité de réception du relief, le relief et la cavité ayant des faces adaptées pour provoquer le coulissement du coulisseau par effet de rampe.

Cet agencement est fiable, simple et peu encombrant.

Selon un mode de réalisation, l'insert présente la cavité.

Avantageusement, la pièce qui comprend le relief présente une face principale plane, le relief s'étendant en saillie de cette face suivant la direction de l'axe de rotation.

Ainsi, la surface d'accouplement entre le relief et la cavité est plus importante.

De préférence, le relief comprend une dent.

L'invention a également pour objet un système d'essuyage pour véhicule comprenant un moteur d'entraînement, un bras porte-balai et un mécanisme d'entraînement reliant le moteur et le bras conforme à l'invention.

De préférence, le coulisseau est relié au bras porte-balai par un ressort tendant à solidariser en rotation l'organe et le coulisseau.

Ainsi, la force de rappel du ressort participe à maintenir le coulisseau en position embrayée. De plus, ce même ressort peut être utilisé pour maintenir le balai d'essuyage contre la surface vitrée.

Avantageusement, le moteur comprend un arbre de sortie formant l'organe d'accouplement.

L'encombrement du système d'essuyage est alors réduit et la simplicité du système améliorée car l'arbre de sortie coopère directement avec le coulisseau.

On va maintenant décrire, à titres d'exemples non limitatifs, quatre modes de réalisation en se référant aux figures suivantes :
- Les figures 1, 2 et 3 sont des vues en perspective respectivement d'une tête d'entraînement, d'un insert d'accouplement et d'un coulisseau selon un premier mode de réalisation ;
- Les figures 4 et 5 sont des vues en perspective selon deux angles différents de la tête d'entraînement et du coulisseau assemblés ;
- Les figures 6 à 10 sont des vues en perspective de la tête, du coulisseau et de l'insert assemblés ;
- La figure 11 et 12 sont des vues en coupe selon le plan XI-XI et de dessus de la tête, de l'insert et du coulisseau assemblés ;
- Les figures 13 à 15 sont des vues de dessus et en coupe du coulisseau et de l'insert illustrant le mécanisme en positions embrayée et débrayée respectivement;
- La figure 16 est une vue de dessus d'un insert et d'un coulisseau assemblés selon un deuxième mode de réalisation ;
- Les figures 17 et 18 sont des vues respectives de dessus et de côté d'un insert et d'un coulisseau selon un troisième mode de réalisation ; et
- Les figures 19 à 21 sont des vues de côté et de dessus d'un arbre selon un quatrième mode de réalisation.

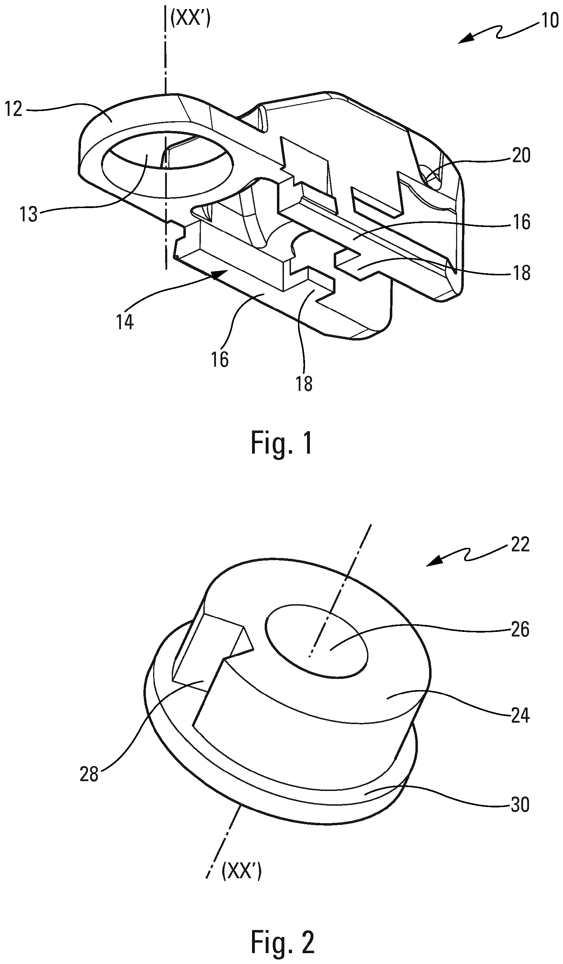

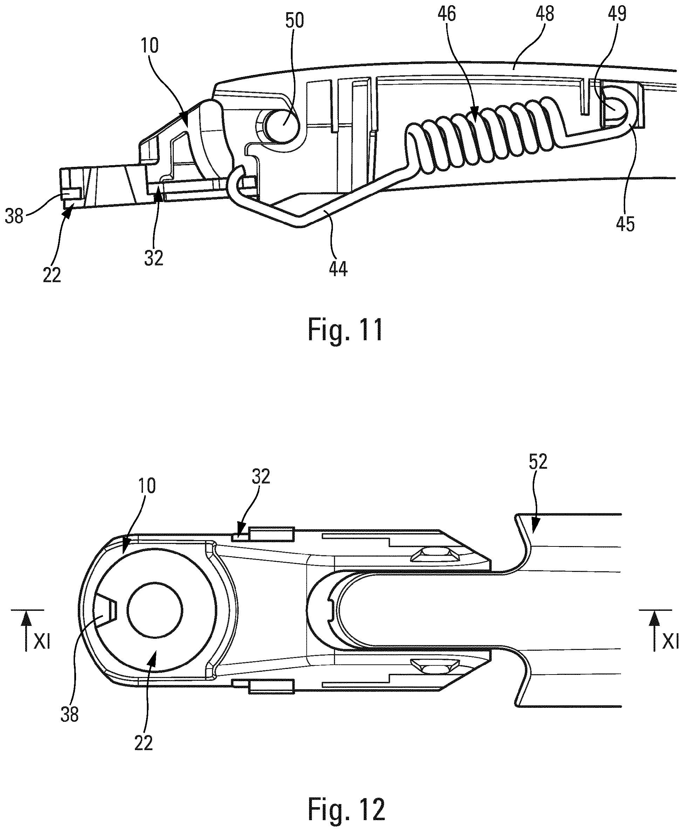

Nous allons présenter un premier mode de réalisation de l'invention en référence aux figures 1 à 15. Le système d'essuyage comprend un moteur d'entraînement, non illustré, comportant un arbre de sortie. Il comprend aussi un bras porte-balai et un mécanisme d'entraînement du bras reliant l'arbre et le bras.

Le mécanisme comprend notamment une tête d'entraînement 10, un organe d'accouplement, ici un insert 22, monté mobile à rotation par rapport à la tête et un coulisseau 32 illustrés respectivement aux figures 1 à 3.

La tête 10 présente une partie circulaire creuse 12 dont les bords forment un logement de réception circulaire 13 de l'insert et de l'arbre. Ce logement présente un axe (XX') autour duquel l'arbre peut effectuer une rotation alternée. La tête 10 comporte en outre un support 14 destiné à recevoir le coulisseau monté mobile à coulissement par rapport à la tête. La direction de coulissement est perpendiculaire à l'axe (XX'). Le support 14 comprend deux pattes 16 dimensionnées pour enserrer le coulisseau et deux appendices 18 s'étendant perpendiculairement aux pattes 16 et tels qu'ils peuvent maintenir le coulisseau contre la partie inférieure de la tête 10. Les pattes 16 assurent le guidage du coulisseau lors du coulissement.

La tête 10 possède également des moyens de liaison au bras porte-balai. Ces moyens comprennent deux ouvertures circulaires coaxiales 20 situées sur deux flancs opposés de la tête 10. Ces ouvertures 20 sont destinées à recevoir une vis ou un arbre de fixation permettant d'établir une liaison en rotation du bras avec la tête autour d'un axe orthogonal à l'axe (XX'). Cette rotation est notamment utilisée lorsque l'utilisateur souhaite par exemple éloigner le balai de la vitre. La tête d'entraînement peut être réalisée dans un matériau tel qu'une matière plastique ou un métal.

L'insert 22 a une forme générale à symétrie de révolution autour de l'axe (XX'). Il présente un logement central 26 de forme cylindrique à section circulaire pour la réception de l'arbre du moteur et la fixation rigide à ce dernier. L'insert 22 présente en outre une face externe de forme cylindrique à section circulaire dans laquelle est ménagée une cavité telle qu'une rainure 28 adaptée pour recevoir une dent du coulisseau comme on le verra plus loin. La cavité présente deux faces planes non parallèles entre elles opposées l'une à l'autre et divergentes en direction opposée à l'axe (XX'). L'insert 22 présente également a sa base une partie circulaire 30 d'un diamètre plus large que celui de la face externe.

Le coulisseau 32 a une forme générale plate délimitée par deux faces principales planes parallèles opposées 34 et 40. Il présente une ouverture oblongue formant un logement de réception 36 de l'insert. La partie circulaire porte en outre sur toute son épaisseur un relief tel qu'une dent d'accouplement 38 s'étendant en saillie du bord de la partie en direction du centre du logement 36. Le relief ne dépasse pas l'épaisseur de la partie. Le coulisseau présente de plus une partie pleine 40 adjacente à la partie circulaire et formant avec cette partie deux épaulements de butée 41. La partie pleine 40 comporte également un moyen de liaison à un bras porte-balai. Ici, ce moyen est un orifice 42.

L'insert 22 et le coulisseau 32 sont réalisés dans des matériaux qui peuvent glisser facilement l'un par rapport à l'autre. On peut évoquer les associations suivantes, non limitatives : L'insert et le coulisseau comprennent de l'acier, l'insert comporte de l'acier et/ou de l'aluminium et le coulisseau un matériau polymère, l'insert comporte du zamac et le coulisseau un matériau polymère ou de l'aluminium.

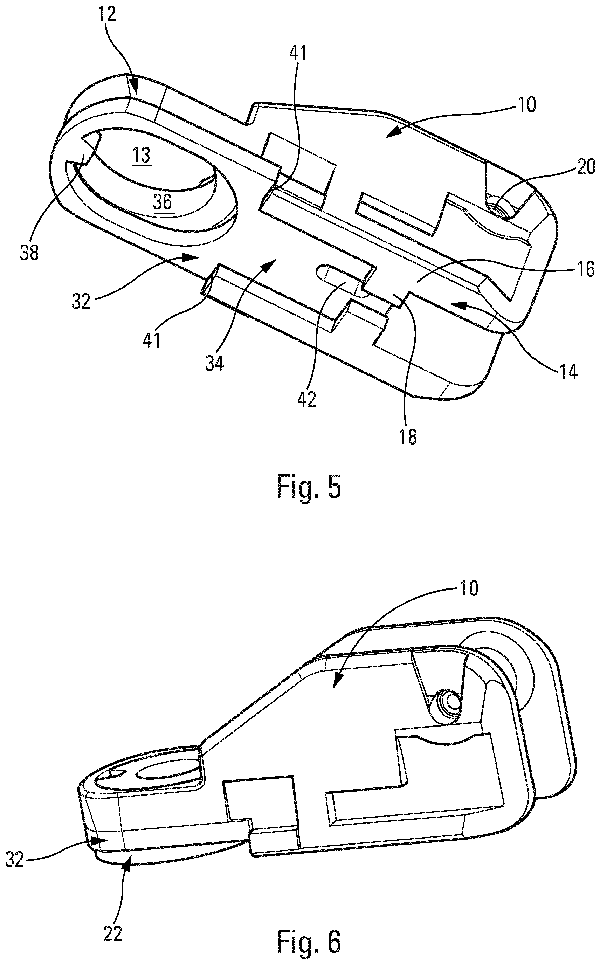

Les figures 5 à 13 illustrent le mécanisme en position embrayée.

Comme le montre la figure 5, le coulisseau 32 est dimensionné pour que les bords latéraux de la partie 40 soient enserrés par les deux pattes 16 de la tête 10. Ces pattes assurent également le guidage à coulissement du coulisseau. Les deux appendices 18 s'étendent perpendiculairement aux pattes 16, mais sans obstruer l'orifice 42 du coulisseau 32. Les pattes 16 peuvent venir en butée contre les épaulements 41 qui définissent ainsi une position de fin de course pour le coulissement du coulisseau par rapport à la tête lorsque le coulisseau passe de la position débrayée à la position embrayée.

En position embrayée, le coulisseau 32 est maintenu contre la partie inférieure de la tête d'entraînement 10 par les deux appendices. Le logement 13 de la tête s'étend entièrement en regard de celui 36 du coulisseau et en regard de la dent. Celle-ci est suffisamment grande pour s'étendre en saillie du bord de la partie circulaire 12 de la tête 10. Les bords circulaires internes des logements du coulisseau et de la tête, du côté opposé au support, sont en coïncidence. Le coulisseau 32 ne s'étend pas en saillie de la tête du côté opposé au support 14.

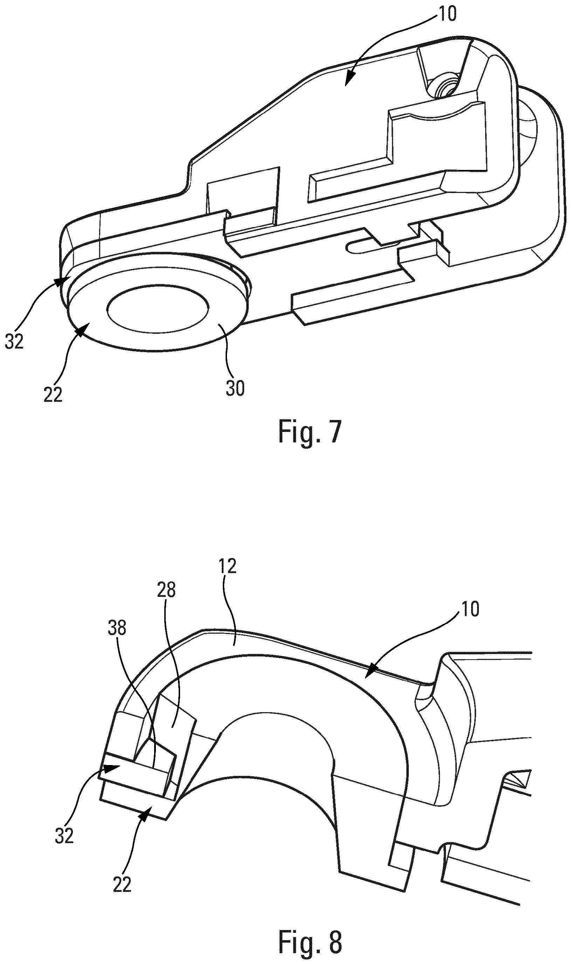

Comme illustré aux figures 6 et 7 l'insert 22 est reçu dans les logements 13 et 36 de la tête 10. Ainsi, la partie circulaire 34 du coulisseau 32 est emprisonnée entre la base 30 de l'insert 22 et la tête 10. Le coulisseau 32 est en outre maintenu par les paires de pattes 16 et d'appendices 18.

La figure 8 illustre la solidarisation en rotation de l'insert 22 et de la tête 10. Cette solidarisation correspond à une situation où une valeur d'un couple appliqué sur le bras par rapport à l'arbre est inférieure à un seuil prédéterminé. La solidarisation s'effectue par la réception de la dent 38 du coulisseau 32 dans la cavité 28 de l'insert 22 suivant un assemblage mâle-femelle. Lorsque l'arbre, non représenté ici, est en rotation, il entraîne la rotation de l'insert 22. Comme l'insert 22 est solidaire en rotation du coulisseau 32, ce dernier est également en rotation et entraîne la tête 10, et donc le bras porte-balai et le balai d'essuyage.

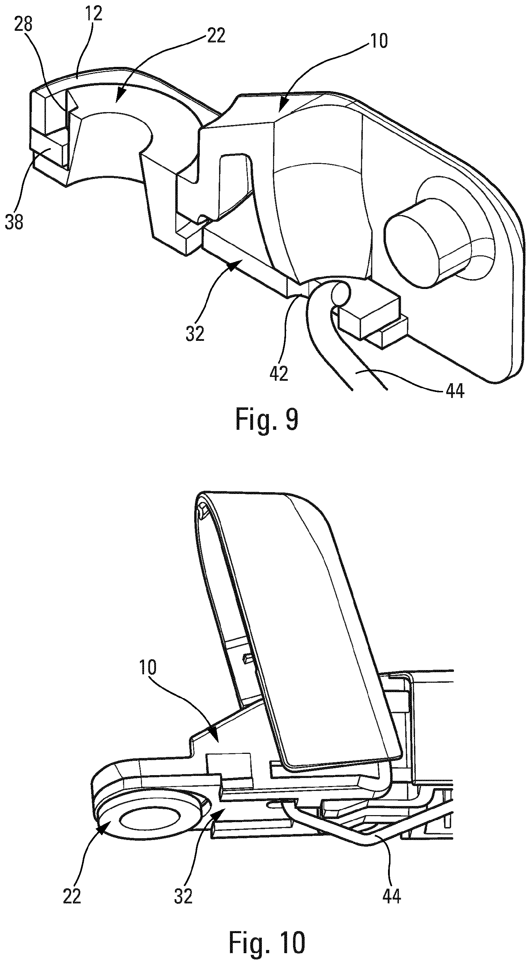

Comme illustré aux figures 9, 10 et 11 l'orifice 42 du coulisseau permet de le relier au bras porte-balai 48 par l'intermédiaire d'un ressort 46. Ceci s'effectue au moyen d'une extrémité 44 du ressort en forme de crochet qui est accrochée au coulisseau 32 par l'orifice 42. Une extrémité opposée 45 du ressort également en forme de crochet est accrochée au bras porte-balai 48. Le bras porte-balai 48 est lié à la tête 10 à l'aide d'un arbre 50 s'étendant latéralement dans les orifices 20 de la tête et permettant la solidarisation de la tête 10 et du bras 48. Le ressort exerce une force de rappel tendant à maintenir la dent 38 dans la cavité 28 et le bras contre la vitre.

En outre, un carter 52 de protection est adjoint sur le bras porte-balai 48.

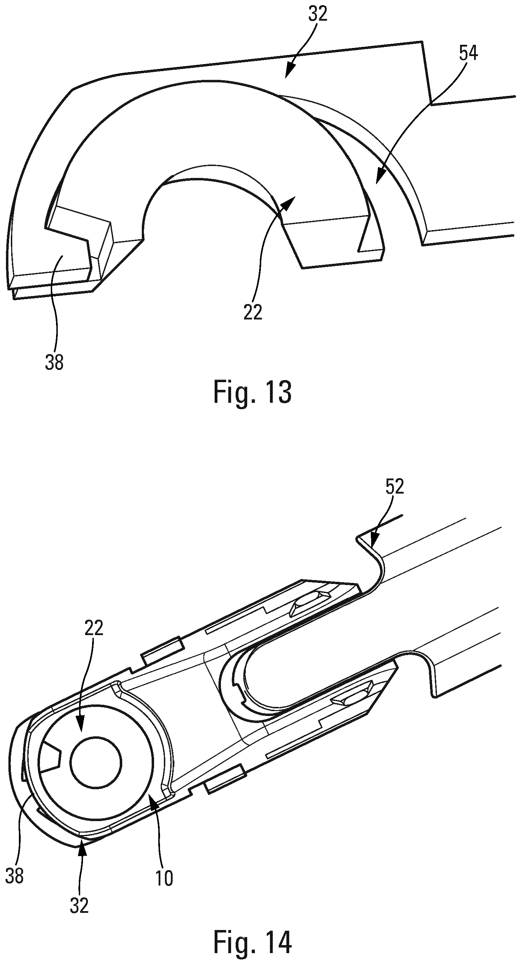

Il est à noter, notamment en référence à la figure 13 que le diamètre de l'insert 22 est tel que, lorsque la dent 38 du coulisseau 32 est logée dans la rainure 28 de l'insert, il subsiste un espace 54 non occupé entre l'insert et le coulisseau situé du côté de l'insert opposé à la dent.

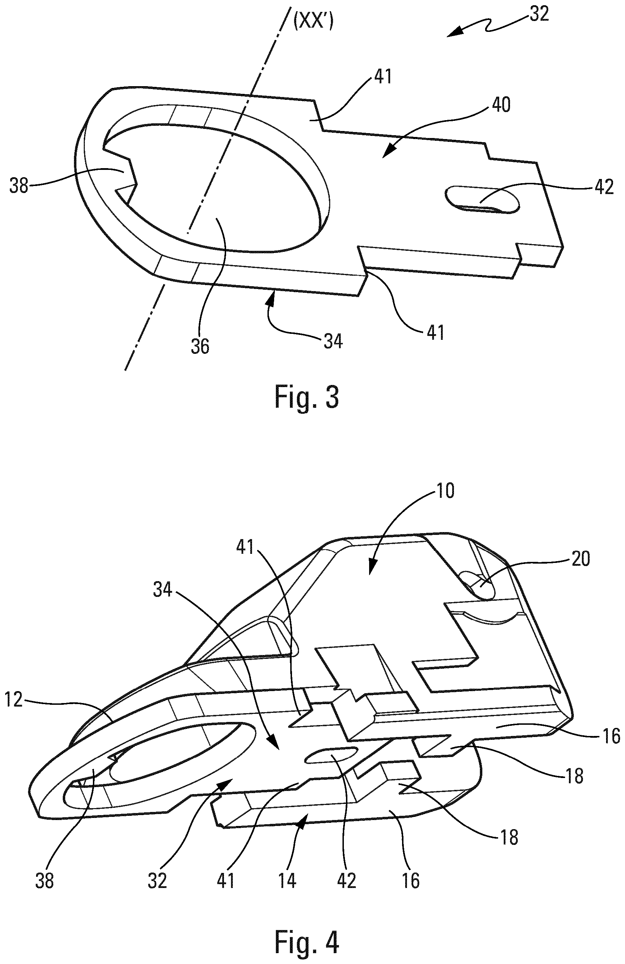

On va maintenant décrire en références aux figures 4 et 11 à 15 le fonctionnement du mécanisme lorsque la valeur d'un couple appliqué autour de l'axe sur le bras par rapport à l'arbre jusqu'alors inférieure à un seuil prédéterminé dépasse ce seuil. Le mécanisme va alors gagner sa position débrayée.

Tant que la valeur du couple est inférieure au seuil, le mécanisme d'entraînement est tel qu'illustré aux figures 5 à 13.

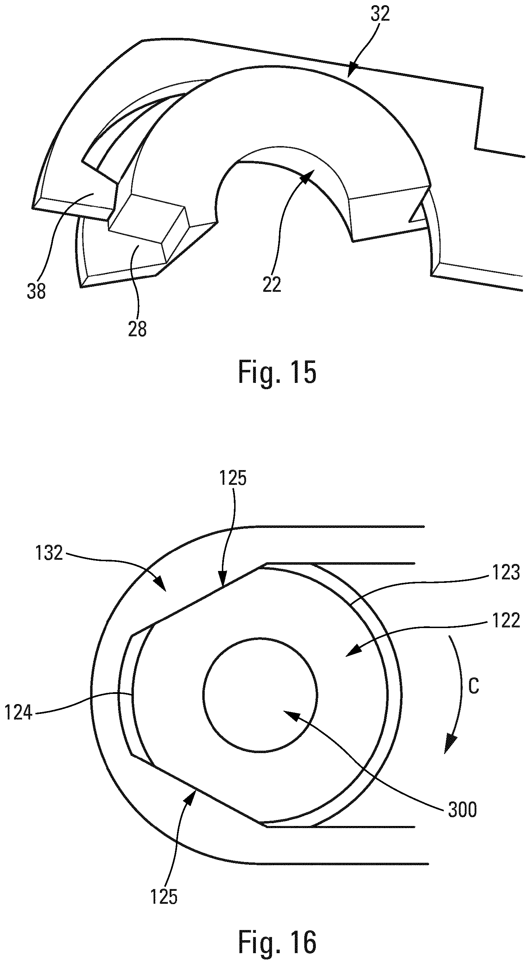

Lorsque le système d'essuyage est à l'arrêt et que la valeur du couple dépasse le seuil, la force de rappel du ressort 46 n'est plus suffisante pour maintenir la dent 38 dans la cavité 28. Ainsi, par effet de rampe, la dent 38 quitte la cavité 28 et le coulisseau coulisse par rapport à la tête à l'encontre de la force de rappel exercée par le ressort. Comme le montre la figure 4, les épaulements 41 sont libres, et la dent 38 du coulisseau sort de la cavité. Cette situation est notamment illustrée aux figures 14 et 15. L'arbre reste solidaire de l'organe d'accouplement ici constitué par l'insert 22. En revanche, l'insert 22 n'est plus solidarisé par la dent 38 du coulisseau 32 à la tête d'entraînement 10. Le balai et la tête tournent alors par rapport à l'arbre et à l'insert autour de l'axe (XX').

Lorsque le système est en fonctionnement et que la valeur du couple dépasse le seuil, le mécanisme fonctionne de manière analogue. A l'issue du débrayage, l'arbre et l'insert tournent par rapport au balai et à la tête.

Ainsi, le coulisseau 32 désolidarise en rotation l'arbre et le bras lorsqu'une valeur d'un couple appliqué sur le bras par rapport à l'arbre est supérieure au seuil en coulissant dans la direction perpendiculaire à l'axe. A l'issue du coulissement, le système d'essuyage est débrayé, et aucune pièce n'a été détériorée.

L'utilisateur peut par la suite embrayer à nouveau le système d'essuyage par simple rotation du bras afin de repositionner la dent 38 dans la rainure 28. La force de rappel du ressort 46 tend à faire coulisser le coulisseau de sorte que la dent 38 se positionne dans la rainure.

On va décrire en référence à la figure 16 un deuxième mode de réalisation. Seules les différences avec le précédent mode vont donc être présentées. Les références numériques des éléments analogues seront augmentées de 100.

La section de l'insert 122, vue de dessus, a cette fois la forme d'une couronne entamée par deux faces planes identiques 125 symétriques l'une de l'autre et s'étendant sur une même moitié du disque. Le bord du coulisseau 132 formant le logement de réception de l'insert présente une section complémentaire avec deux faces planes aptes à venir simultanément en contact surfacique avec les deux faces 125, sur toute la hauteur de l'insert. Ainsi, l'organe d'accouplement, ici constitué par l'insert 122, et le coulisseau 132 forment un assemblage mâle-femelle apte à provoquer le coulissement du coulisseau 132 par effet de rampe. De plus, c'est ici le corps de l'insert 122 qui réalise l'accouplement. L'ensemble est positionné sur un arbre 300 de sortie du moteur.

Le mécanisme fonctionne de façon analogue à celui du premier mode. Lorsque la force de rappel du ressort n'est plus suffisante pour s'opposer à un couple élevé sur le système, le coulisseau coulisse, par effet de rampe, dans une direction perpendiculaire à un axe de l'arbre pour désolidariser en rotation l'insert et la tête.

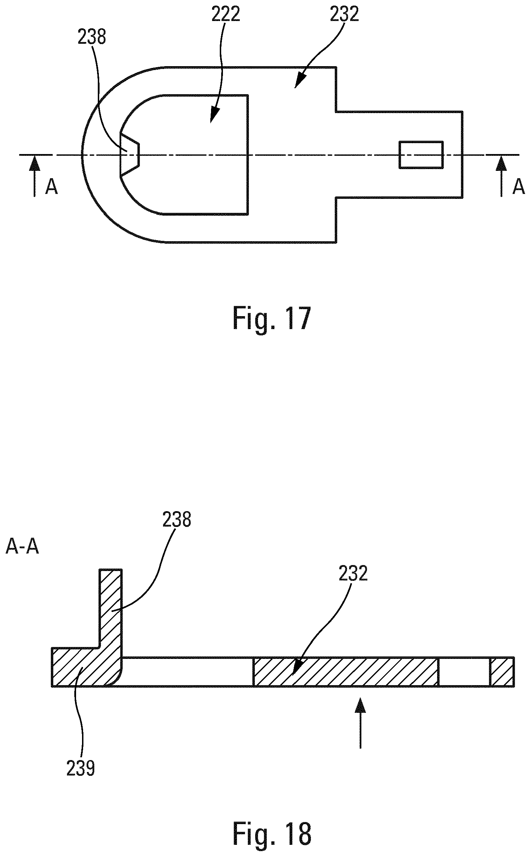

On a illustré aux figures 17 et 18 un troisième mode de réalisation de l'invention. Seules les différences vont être explicitées. Les références numériques des éléments analogues seront augmentées de 100.

Comme précédemment, le coulisseau 232 présente deux faces principales planes ainsi qu'un relief 238 s'étendant à partir d'une partie 239 formant un logement de réception de l'arbre. En revanche, le relief s'étend cette fois en saillie perpendiculairement à l'une des faces principales planes du coulisseau 232. Ce relief peut pénétrer dans une rainure de même longueur de l'insert ou de l'arbre.

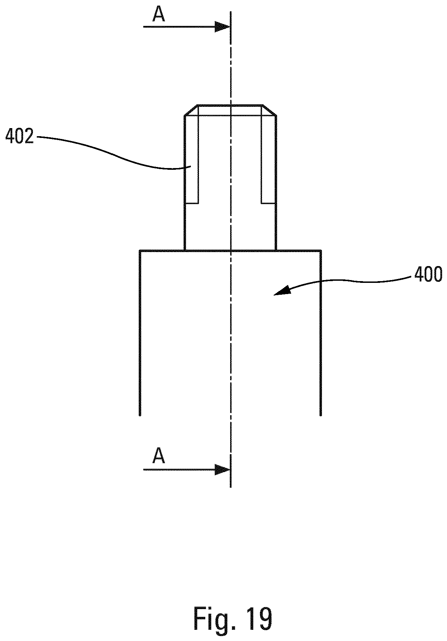

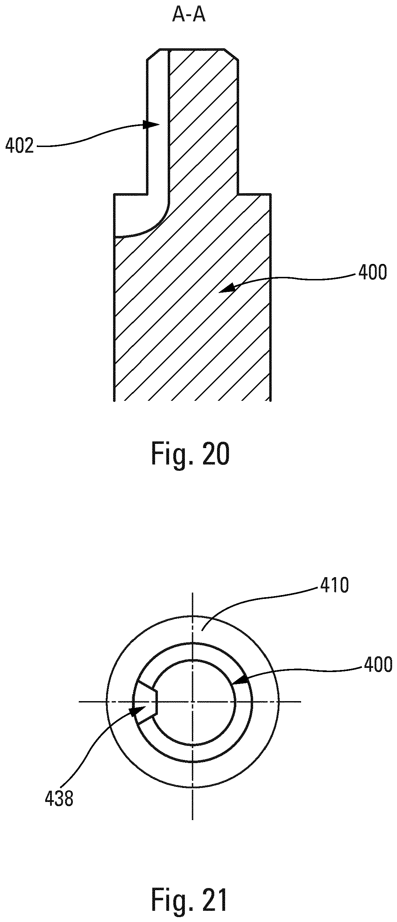

On a représenté aux figures 19 à 21 l'invention selon un quatrième mode de réalisation. Ce mode présente la particularité de ne pas nécessiter d'insert pour fonctionner. En effet, l'arbre 400 du moteur forme l'organe d'accouplement. L'arbre 400 est adapté pour recevoir le coulisseau. Il possède à cette fin une cavité 402 allongée suivant une direction parallèle à son axe. Le coulisseau présente une dent d'accouplement 438. Le couple formé par la cavité 402 et la dent 438 présente des profils complémentaires similaires à ceux décrits précédemment et solidarise en rotation le bras porte-balai 410 et l'arbre 400. Ainsi, l'arbre de sortie du moteur est relié directement au coulisseau sans nécessiter la présence d'un insert.

Bien que l'invention soit ici décrite selon quatre modes de réalisation, ceux-ci ne sont nullement limitatifs. On pourra par exemple prévoir que la dent soit sur l'insert et la cavité sur le coulisseau.

## Revendications

1. Mécanisme d'entraînement d'un système d'essuyage pour véhicule comprenant:
- un organe d'accouplement (22),
- une tête d'entraînement (10) comprenant des moyens de liaison (20) à un bras porte-balai (48), le mécanisme étant **caractérisé en ce qu'**il comprend:
- un coulisseau (32) agencé de sorte qu'il solidarise en rotation l'organe et la tête lorsqu'une valeur d'un couple appliqué sur la tête par rapport à l'organe est inférieure à un seuil prédéterminé, et les désolidarise en rotation dans le cas contraire en coulissant dans une direction perpendiculaire à un axe de rotation de l'organe.

2. Mécanisme selon la revendication précédente, dans lequel le coulisseau (32) présente un logement (36) de réception de l'organe d'accouplement (22).

3. Mécanisme selon l'une quelconque des revendications précédentes, dans lequel l'organe d'accouplement (122) et le coulisseau (132) forment un assemblage mâle-femelle apte à provoquer le coulissement du coulisseau par effet de rampe.

4. Mécanisme selon l'une quelconque des revendications précédentes, dans lequel l'organe (22) comprend un corps principal apte à provoquer le coulissement du coulisseau (32) par effet de rampe.

5. Mécanisme selon l'une quelconque des revendications précédentes, dans lequel l'organe est formé par un insert (22) apte à être relié à un arbre d'un moteur.

6. Mécanisme selon l'une quelconque des revendications précédentes, dans lequel l'un parmi l'organe (22) et le coulisseau (32) présente un relief (38) et l'autre parmi l'organe et le coulisseau présente une cavité (28) de réception du relief, le relief et la cavité ayant des faces adaptées pour provoquer le coulissement du coulisseau par effet de rampe.

7. Mécanisme selon la revendication précédente, dans lequel la pièce (232) qui comprend le relief présente une face principale plane, le relief (238) s'étendant en saillie de cette face suivant la direction de l'axe de rotation.

8. Mécanisme selon la revendication 5 et l'une quelconque des revendications 6 et 7, dans lequel l'insert (22) présente la cavité (28).

9. Mécanisme selon l'une quelconque des revendications 6 à 8, dans lequel le relief comprend une dent (38).

10. Système d'essuyage pour véhicule comprenant :
- un moteur d'entraînement,
- un bras porte-balai (48), et
- un mécanisme d'entraînement reliant le moteur et le bras, selon l'une quelconque des revendications précédentes.

11. Système d'essuyage selon la revendication précédente, dans lequel le coulisseau (32) est relié au bras porte-balai (48) par un ressort (46) tendant à solidariser en rotation l'organe et le coulisseau.

12. Système d'essuyage selon l'une quelconque des revendications 10 et 11, dans lequel le moteur comprend un arbre de sortie (400) formant l'organe d'accouplement.

## Patentansprüche

1. Antriebsmechanismus eines Wischersystems für ein Fahrzeug, umfassend:
- ein Kopplungsorgan (22),
- einen Antriebskopf (10), welcher Mittel zur Verbindung (20) mit einem Scheibenwischerarm (48) umfasst, wobei der Mechanismus **dadurch gekennzeichnet ist, dass** er umfasst:
- ein Gleitstück (32), das derart angeordnet ist, dass es das Organ und den Antriebskopf drehfest verbindet, wenn ein Wert eines Drehmoments, das auf den Antriebskopf in Bezug auf das Organ ausgeübt wird, kleiner als ein vorbestimmter Schwellenwert ist, und im entgegengesetzten Fall ihre drehfeste Verbindung löst, indem es in einer zu einer Drehachse des Organs senkrechten Richtung gleitet.

2. Mechanismus nach dem vorhergehenden Anspruch, wobei das Gleitstück (32) einen Sitz (36) zur Aufnahme des Kopplungsorgans (22) aufweist.

3. Mechanismus nach einem der vorhergehenden Ansprüche, wobei das Kopplungsorgan (122) und das Gleitstück (132) eine Anordnung Steckelement-Aufnahmeelement bilden, die geeignet ist, das Gleiten des Gleitstücks durch Rampenwirkung hervorzurufen.

4. Mechanismus nach einem der vorhergehenden Ansprüche, wobei das Organ (22) einen Hauptkörper umfasst, der geeignet ist, das Gleiten des Gleitstücks (32) durch Rampenwirkung hervorzurufen.

5. Mechanismus nach einem der vorhergehenden Ansprüche, wobei das Organ von einem Einsatz (22) gebildet wird, der geeignet ist, mit einer Welle eines Motors verbunden zu werden.

6. Mechanismus nach einem der vorhergehenden Ansprüche, wobei das eine von dem Organ (22) und dem Gleitstück (32) eine Erhebung (38) aufweist und das andere von dem Organ und dem Gleitstück eine Vertiefung (28) zur Aufnahme der Erhebung aufweist, wobei die Erhebung und die Vertiefung Flächen aufweisen, die dafür ausgelegt sind, das Gleiten des Gleitstücks durch Rampenwirkung hervorzurufen.

7. Mechanismus nach dem vorhergehenden Anspruch, wobei das Teil (232), welches die Erhebung umfasst, eine ebene Hauptfläche aufweist, wobei sich die Erhebung (238) von dieser Fläche aus vorspringend in der Richtung der Drehachse erstreckt.

8. Mechanismus nach Anspruch 5 und einem der Ansprüche 6 und 7, wobei der Einsatz (22) die Vertiefung (28) aufweist.

9. Mechanismus nach einem der Ansprüche 6 bis 8, wobei die Erhebung einen Zahn (38) umfasst.

10. Wischersystem für ein Fahrzeug, umfassend:
- einen Antriebsmotor,
- einen Scheibenwischerarm (48), und
- einen Antriebsmechanismus, der den Motor und den Arm verbindet, nach einem der vorhergehenden Ansprüche.

11. Wischersystem nach dem vorhergehenden Anspruch, wobei das Gleitstück (32) mit dem Scheibenwischerarm (48) durch eine Feder (46) verbunden ist, die bestrebt ist, das Organ und das Gleitstück drehfest zu verbinden.

12. Wischersystem nach einem der Ansprüche 10 und 11, wobei der Motor eine Abtriebswelle (400) umfasst, die das Kopplungsorgan bildet.

## Claims

1. A drive mechanism for a wiper system for a vehicle, comprising:
- a coupling unit (22);
- a drive head (10) comprising means (20) for connection to a wiper-holder arm (48), the mechanism **characterized in that** it comprises:
- a slide (32) which is designed such that it engages the unit and the head in rotation when a torque value applied to the head relative to the unit is lower than a predetermined threshold, and disengages them in rotation in the opposite case by sliding in a direction perpendicular to an axis of rotation of the unit.

2. The mechanism as claimed in the preceding claim, **characterized in that** the slide (32) has a receptacle (36) for receipt of the coupling unit (22) .

3. The mechanism as claimed in either of the preceding claims, **characterized in that** the coupling unit (122) and the slide (132) form a male-female assembly which can give rise to sliding of the slide by means of a ramp effect.

4. The mechanism as claimed in any one of the preceding claims, **characterized in that** the unit (22) comprises a main body which can give rise to the sliding of the slide (32) by means of a ramp effect.

5. The mechanism as claimed in any one of the preceding claims, **characterized in that** the unit is formed by an insert (22) which can be connected to a shaft of a motor.

6. The mechanism as claimed in any one of the preceding claims, **characterized in that** either one of the unit (22) and the slide (32) has a relief (38) and the other one of the unit and the slide has a cavity (28) for receipt of the relief, the relief and the cavity having faces which are designed to give rise to the sliding of the slide by means of a ramp effect.

7. The mechanism as claimed in the preceding claim, **characterized in that** the part (232) which comprises the relief has a flat main face, with the relief (238) extending projecting from this face according to the direction of the axis of rotation.

8. The mechanism as claimed in claim 5 and either of claims 6 and 7, **characterized in that** the insert (22) contains the cavity (28).

9. The mechanism as claimed in any one of claims 6 to 8, **characterized in that** the relief comprises a tooth (38).

10. A wiper system for a vehicle comprising:
- a drive motor;
- a wiper-holder arm (48); and
- a drive mechanism connecting the motor and the arm, according to any one of the preceding claims.

11. The wiper system as claimed in the preceding claim, **characterized in that** the slide (32) is connected to the wiper-holder arm (48) by a spring (46) which tends to engage the unit and the slide in rotation.

12. The wiper system as claimed in either of claims 10 and 11, **characterized in that** the motor comprises an output shaft (400) which forms the coupling unit.
